# EUROPEAN PATENT APPLICATION

(11) **EP 3 173 999 A1**
(43) Date of publication of application: **31.05.2017**
(21) Application number: 15462005.8
(22) Date of filing: 30.11.2015
(51) Int. Cl.: G06Q 30/02

(54) **METHOD AND COMPUTER PROGRAM PRODUCT FOR CLASSIFYING E-COMMERCE OFFERS INTO GROUPS**

(71) Applicant: MyProducts Kft., 4026 Debrecen (HU)
(72) Inventor: Ács, Zoltán, H-4030 Debrecen (HU); Pinczel, Balázs, H-1222 Budapest (HU); Rácz, Gábor, H-3265 Vécs (HU)
(74) Representative: Harangozo, Gabor

(57) **Abstract**

A method of grouping e-commerce items is disclosed. The method comprising the steps of: defining at least one item category with a unique category ID; for each item category, completing search runs in various e-commerce systems; downloading a plurality of offers from each search run, thereby obtaining an initial set of offers; for each offer of each search run, storing at least the following data: title of the offer, item description, associated category ID; finding relevant words for each item category on the basis of the stored data of the offers; forming a word vector from the relevant words for each item category; within each item category, clustering the offers into different item groups using a predetermined similarity metrics, on the basis of the relevant words and their occurrence frequencies in the offers; selecting a first portion of offers as a training set and a second portion of offers as a test set for training a classifier algorithm; and training the classifier algorithms with using for the training set and the test set of the offers to adjust the internal parameters of the classification algorithm so that the algorithm achieves a desired precision level for the initial set of offers.

## Description

### FIELD OF THE INVENTION

The present invention relates to a method and a computer program product for classifying e-commerce offers into special groups called virtual items.

### BACKGROUND OF THE INVENTION

There are several online available searching engines for products and services, which are based on price comparison. These engines generally collect product information, including pricing, from participating retailers. They usually build up and maintain an own product database, and if someone wants to become a member of the database, he has to pay a fee for it. On the one hand, this business logic can cause a latency on the appearance of products on the target lists. On the other hand, the paid advertisements may also have side effects on the search result, and in serious cases the customer won't necessarily get the best offer.

The present invention provides a computerized mechanism for collecting and categorizing offers from different commercial systems, and as a result a target list is offered for the users, which covers a wider range of online offers, and which automatically organizes the products and services into a hierarchical data structure, called virtual item.

### SUMMARY OF THE INVENTION

It is an object of the present invention to provide a method of grouping e-commerce items, the method comprising the steps of:
a) defining at least one item category with a unique category ID;
b) for each item category, completing search runs in various e-commerce systems;
c) downloading a plurality of offers from each search run, thereby obtaining an initial set of offers;
d) for each offer of each search run, storing at least the following data:
   i. title of the offer,
   ii. item description,
   iii. associated category ID;
e) finding relevant words for each item category on the basis of the stored data of the offers;
f) forming a word vector from the relevant words for each item category;
g) within each item category, clustering the offers into different item groups using a predetermined similarity metrics, on the basis of the relevant words and their occurrence frequencies in the offers;
h) selecting a first portion of offers as a training set and a second portion of offers as a test set for training a classifier algorithm; and
i) training the classifier algorithms with using for the training set and the test set of the offers to adjust the internal parameters of the classification algorithm so that the algorithm achieves a desired precision level for the initial set of offers.

Preferably, in step e), the Apriori algorithm is used to find the relevant words of a category.

Preferably, in step g), the ISOData algorithm or the k-means algorithm is used to cluster the offers into virtual items.

Preferably, in step i), the naive Bayesian classifier is used to classify the initial set of offers.

Preferably, in step h), the training set contains 1/5 of the offers of the initial set of offers and the test set contains the remaining 4/5 of the offers of the initial set of offers.

Preferably, the method further comprises the step of manually adjusting the internal parameters of the classifier algorithm in step i).

Preferably, in step d), at least one of the following data is additionally stored with each offer: the URL link of the source web site, the title of the offer specified by the searched web page, the original text associated with the offer, the category name or ID used by the searched web site.

Preferably, the method further comprises the steps of:
j) completing a new search for at least one item category;
k) downloading new offers and storing their associated data in the database;
I) finding the relevant words in the new offers;
m) classifying each new offer into one of the virtual item groups by means of the trained classifier algorithm on the basis of the relevant words of the particular new offer.

It is another object of the present invention to provide a non-transitory computer program product is provided for classifying e-commerce offers into special groups called virtual items, the computer program product comprising a computer-readable medium having a plurality of computer program instructions stored therein, which are operable to cause a computer to perform the steps of the method according to the present imvention.

These and other objects, features and advantages of the present invention will become apparent from the following detailed description of illustrative embodiments thereof with reference to the accompanying drawings.

### BRIEF DESCRIPTION OF THE DRAWINGS

FIG. 1 is a flow diagram illustrating the steps of the method according to the invention,
FIG. 2 is a flow diagram illustrating the further steps of a preferred embodiment of the method when it is used for classifying new search offers, according to the invention.

### DETAILED DESCRIPTION OF THE PREFERRED EMBODIMENTS

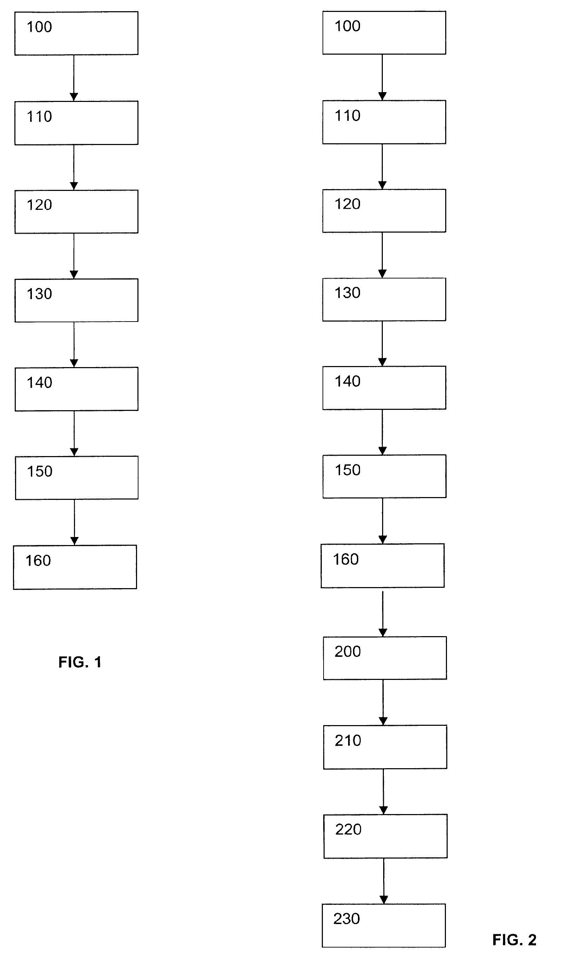

Figure 1 shows the steps of the method for classifying e-commerce offers into specific groups according to the invention. These groups are called virtual items. A virtual item is an artificial collection of e-commerce product or service offers published on the internet in any sort of publicly available web shop like eBay, Amazon, etc. or on any web page offering products or services for customers. For example, within the category of smart phones, virtual items may be defined for *iPhone S6* devices, *iPhone S7* devices, *Samsung Galaxy S* devices, *Samsung Galaxy Note* devices, etc. Each of the virtual items may include any number of products or service which can be classified as belonging to that particular group. Accordingly, in the first step 100 of the method, at least one item category is defined, each item category being identified by a unique Category ID. Such a category may be defined, for example, for smart phones, other consumer electronics products, cars, DVD movies, audio CDs, clothing articles, insurance services, health care services, etc.

In the next step 110 of the method, for each item category, at least one search run is completed by means of an internet a search application, such a Google, Yahoo, etc. or directly in any one of the e-commerce systems, like eBay, Amazon, etc. As the result of a search a plurality of hits are obtained, the number of which within a given search strongly depends on the complexity of the search terms. The more features or data are specified for the category under search, the lower number of hits is expected to be presented by the search engine. Therefore the search within a category may be optimized in order to get a reasonable number of relevant hits.

When the offers are available for a search run, the offers are downloaded in step 120. Then for each offer, at least the following data are stored in a database: title of the offer, description of the, Category ID of the offer. Optionally additional data, such as the URL link of the source web site, the title of the offer specified by the searched web page, the original text associated with the offer, the category name or ID used by the searched web site, etc. may also be stored for the offers.

In the following steps, the textual content of the offers stored in the data base are processed to obtain a text-based characterization of the offers. First in this process, a number of relevant words are found for each item category on the basis of the stored data of the offers belonging to the same category in Step 130. For example, in case of the category of smart phones, the relevant words in the textual content of the offers may include "*iPhone*", "*Samsung*", "*Sony*", "*LCD*", "*TFT*", "*LTE*", "*WiFi*" etc. The relevant words for a category may be found, for example, by using the Apriori algorithm
(https://en.wikibooks.org/wiki/Data_Mining_Algorithms_In_R/Frequent_Pattern_Mining/The _Apriori_Algorithm).

Next in step 140 a word vector is formed for each item category from the relevant words obtained for that category. The number of relevant words, i.e. the length of the word vector may vary among the categories. Preferably, the order of the words within a word vector is not restricted, so any relevant word may have any position within a word vector. It is noted that for different categories the word vectors should contain a different set of relevant words, and it is particularly beneficial if the word vectors of different item categories share as few relevant words as possible, or even there is no overlap between the word vectors of the categories. For this process, we use so called stop words, which are defined as language specific words occurring repeatedly due to linguistic reasons, as well as advertising phrases that are regarded irrelevant text elements in the text processing mechanism of the present invention. The stop words may include, for example, the articles ("a", "an", "the") and other phrases like "almost free", "indispensible offer", etc. Each word whose relative frequency is above a predetermined threshold value, may be regarded as a relevant word.

In the last step 150 of the processing of the stored contents of the whole set of downloaded offers, the offers are classified into different item groups, i.e. into virtual items, by using a predetermined similarity metrics. For the determination of similarity between the offers, the word vectors of the offers are used and it is examined how frequently the relevant words of the word vector of each category appear in the stored textual content of the offers.

For determination of similarity, any kind of clustering algorithm may be used, such as the fast *ISOData algorithm (*Nargess Memarsadeghi, David M. Mount, Nathan S. Netanyahu, and Jacqueline Le Moigne - A Fast Implementation of the ISODATA Clustering Algorithm, International Journal of Computational Geometry & Applications, 2007, pp. 71-103) or the *k-means* algorithm (Coates, Adam; Ng, Andrew Y. - Learning feature representations with k-means, Neural Networks: Tricks of the Trade, Reloaded, Springer LNCS, 2012). After all of the offers have been automatically clustered and each offer is assigned to a respective one of the virtual items within its category, the thus obtained clusters of the virtual items are stored into the database and can be used as a reference classification for the pattern learning procedure of the next steps.

For example, the distance between two word vectors A and B is computed as follows:
1. For each relevant word in word vector A, the same relevant word in the word vector B is searched within a predefined length difference.
2. For each pairs of the previously found common relevant words, we compute the edit-distance between the two words.
   In this context, the term "edit distance" means the number of the different characters in the two particular words. For example, in case of the words "product" and produce", the edit distance is 1, because only the terminating character ('t' vs. 'e') is different between these two words. As result of calculation of the edit distances for a set of relevant words, a vector of integer numbers is generated. The values of this vector may be represented as floating-point values, such as doubles.
3. Finally, the Euclidean norm of this vector is computed as a distance between the two word vectors A and B.

In order to make it possible to classify any new offer resulted from the further item searches, a classification algorithms is to be trained for the appropriate classification of the new offers into the previously clustered virtual items. The following steps of the method according to the invention are used to carry out this training procedure.

In step 160 a first portion of offers is selected from the entire set of the downloaded offers. This first portion of offers will serve as a training set for the training of the classifying algorithm. Then a second portion of offers is also selected from the entire set of the stored offers to create a test set for the training process.

In a preferred embodiment of the method according to the invention, the training set contains the 1/5 of the offers, whereas the test set contains the rest, i.e. the other 4/5 of the offers, but other division of the entire set of the offers may also be conceivable. Alternatively, a reduced set of the offers may be used for the training process to build up a training set and a test set. When generating the training set and the test set, it is necessary for each of the item categories to be represented in both of the training set and the test set, i.e. offers should be selected from each of the item categories for training purposes. Preferably, the elements (i.e. offers) of the training set and the test are selected randomly.

As a classifier algorithm naïve Bayesian classifier (Asraf M. Kibriya, Eibe Frank, Bernhard Pfahringer and Geoffrey Holmes - Multinominal Naïve Bayes for Text Categorization Revisited, Al 2004: Advances in Artificial Intelligence, Volume 3339 of the series Lecture Notes in Computer Science, pp. 488-499) is preferably used, but other appropriate algorithms may also be used.

In course of training the classifier algorithm, first the parameters of the algorithms are set by applying the training set. In this training phase, offers from the training set are presented as input, the identifier of the correct virtual item is presented as output to the algorithm. During the learning phase, the algorithm tries to associate the titles of the offers with one of the virtual elements.

After the internal parameters of the classifier algorithm are set on the basis of the training set, a second phase of training is used to precisely tune the internal parameters of the algorithm by using the test set of offers. When precision of the algorithm has reached a predetermined desired level, the training process is terminated. The test phase is also terminated if the initial learning step limitation is reached even without finding a proper internal parameter set for the classifier algorithm. The parameter 'initial learning step limitation' is defined as the maximum number of repetition of the learning phase of the algorithm. This parameter is to be set in order to avoid an infinite learning loop when the expected accuracy of learning cannot be achieved on the basis of the selected training set of offers.

In the method of the present invention the naïve Bayesian classifier is used in a conventional way. A sample set of offers (i.e. training set) is selected, wherein the virtual items covering the offers of the sample set is known in advance. The association of each offer of the sample set with its respective virtual item and a score for each such association are available at the beginning of the training phase. The values of the scores depend on the number of the virtual items since one offer can be associated only with one virtual item. For example, when there are twenty virtual items in the training process, twenty score values are to be calculated on the basis of the frequency probabilities gained from the Apriori algorithm. Furthermore the actual virtual item associated with a particular offer is also known.

For a simple example, it is assumed that there are two virtual items. In this case, the use of one scoring function is enough to determine the required conditional probabilities. As the scores may have any positive value, score intervals are generated on the basis of the experienced score distribution, and those score intervals provide the basis for probabilities. Assuming a score range from 0 to 200 with five score intervals including the intervals from 0 to 50, from 50 to 150, from 150 to 165, from 165 to 185 and from 185 to 200, and further assuming that the sample set contains 250 offers to be classified, a possible distribution of the offers may be as follows:
- interval [0,50) including 30 offers,
- interval [50,150) including 25 offers,
- interval [150,165) including 40 offers,
- interval [165,185) including 75 offers,
- interval [185,200] including 80 offers.

In this example, if the scoring function returns a value of 78 for a particular sample offer, then the conditional probability that this offer belongs to the second interval (i.e. interval [50,150)) has the value of =25/250, which means a probability of 10%

Now an example with specific offers are given below with taking two mobile phone products, namely an "Apple iPhone 6 16GB" and an "Apple iPhone 5S 16GB" device. Now one can calculate the distance between the two offers after pairing their "closest" words. After determining the word pairs, the distance between the pairs of words can be calculated in the following way:
- Apple - Apple: editing distance is 0,
- iPhone - iPhone: editing distance is 0,
- 16GB-16GB: editing distance is 0,
- 6 - 5S, editing distance is 2.

Next, the Euclidean norm of the above obtained vector [0,0,0,2] is calculated, which results in the value of 2. If this value is within a predefined tolerance range, then a new virtual item with the title 'Apple iPhone 16GB' may be generated on the basis of the common relevant words above. Initially, this virtual item will contain the above two products.

Optionally, in a preferred embodiment of the method, the classification decisions of the algorithm may be scored by a training expert to manually improve precision of the algorithm. In this way positive feedbacks (i.e. high scores for right classification decisions) could increase the confidence of classification, while negative feedbacks (i.e. low scores for wrong classification decisions) could decrease the probability value of a particular classification.

Due to the above steps of the method according to the present invention, the collected search offers are categorized and clustered into separate virtual items, and a classifier algorithm is trained to properly classify the currently stored offers. Now the system is ready to receive new offers from further searches. The following steps may be additionally carried out to classify any new offer subsequently found on the internet through a search for further e-commerce offers of products and services.

In step 200 a new search is conducted for offers in at least one item category. Then in step 210 the new offers are downloaded and all required data associated with the offers are stored as in step 120. Next, in step 220 the relevant words are found in the offers, and in step 230, each new offer is classified by means of the trained classifier algorithm to assign it to one of the virtual item groups on the basis of the relevant words of the given new offer.

In course of the classification of the new offers, the conditional probability of the classification into a virtual item is determined over each existing virtual item, and the virtual item with the highest probability value provided by the classifier algorithm will be selected as the virtual item to which the given offer belongs.

In a second aspect of the present invention a non-transitory computer program product is provided for classifying e-commerce offers into special groups called virtual items, the computer program product comprising a computer-readable medium having a plurality of computer program instructions stored therein, which are operable to cause a computer to perform the steps of the method according to the invention.

It is noted that all of the product names, service names, company names, standards, features and properties mentioned above serve solely for the purpose of illustration of particular method steps or exemplary embodiments of the method according to the invention in the given context of the specification, and no way they can be regarded as any kind of limitation of the scope of invention or the use or application of the method and the computer program product according to invention.

## Claims

1. A method of grouping e-commerce items, the method comprising the steps of:
a) defining at least one item category with a unique category ID;
b) for each item category, completing search runs in various e-commerce systems;
c) downloading a plurality of offers from each search run, thereby obtaining an initial set of offers;
d) for each offer of each search run, storing at least the following data:
i. title of the offer,
ii. item description,
iii. associated category ID;
e) finding relevant words for each item category on the basis of the stored data of the offers;
f) forming a word vector from the relevant words for each item category;
g) within each item category, clustering the offers into different item groups using a predetermined similarity metrics, on the basis of the relevant words and their occurrence frequencies in the offers;
h) selecting a first portion of offers as a training set and a second portion of offers as a test set for training a classifier algorithm; and
i) training the classifier algorithms with using for the training set and the test set of the offers to adjust the internal parameters of the classification algorithm so that the algorithm achieves a desired precision level for the initial set of offers.

2. The method of claim 1, wherein in step e), the Apriory algorithm is used to find the relevant words of a category.

3. The method of claim 1, wherein in step g), the ISOData algorithm or the k-means algorithm is used to cluster the offers into virtual items.

4. The method of claim 1, wherein in step i), the naive Bayesian classifier is used to classify the initial set of offers.

5. The method of claim 1, wherein in step h), the training set contains 1/5 of the offers of the initial set of offers and the test set contains the remaining 4/5 of the offers of the initial set of offers.

6. The method of claim 1, wherein the method further comprises the step of manually adjusting the internal parameters of the classifier algorithm in step i).

7. The method of claim 1, wherein in step d), at least one of the following data is additionally stored with each offer: the URL link of the source web site, the title of the offer specified by the searched web page, the original text associated with the offer, the category name or ID used by the searched web site.

8. The method of claim 1, wherein the method further comprises the steps of:
j) completing a new search for at least one item category;
k) downloading new offers and storing their associated data in the database;
l) finding the relevant words in the new offers;
m) classifying each new offer into one of the virtual item groups by means of the trained classifier algorithm on the basis of the relevant words of the particular new offer.

9. A non-transitory computer program product is provided for classifying e-commerce offers into special groups called virtual items, the computer program product comprising a computer-readable medium having a plurality of computer program instructions stored therein, which are operable to cause a computer to perform the steps of the method according to claim 1.
